# EUROPEAN PATENT SPECIFICATION

(11) **EP 1 764 348 B1**
(45) Date of publication and mention of the grant of the patent: **27.05.2009**
(21) Application number: 05077104.7
(22) Date of filing: 16.09.2005
(51) Int. Cl.: C02F 1/62, C07K 14/79

(54) **A method for removing oxo-anions and metal cations from a liquid**
Verfahren zum Entfernen von Oxo-Anionen und Metallkationen aus einer Flüssigkeit
Méthode pour éliminer des oxo-anions et des cations métalliques d'un liquide

(43) Date of publication of application: 21.03.2007
(73) Proprietor: Technische Universiteit Delft, 2628 BL Delft (NL)
(72) Inventor: Hasan, Muhammad Nahidul, 2624 SG Delft (NL); Van Loosdrecht, Marinus Cornelis Maria, 2548 HJ Den Haag (NL); Hagen, Wilfred Raymond, 6862 EG Oosterbeek (NL)
(74) Representative: Kupecz, Arpad

(56) References cited:
- P M MATIAS ET AL.: "Crystallization and preliminary X-ray characterization of a ferritin from the hyperthermophoilic archaeon and anaerobe Pyrococcus furiosus" ACTA CRYSTALLOGRAPHICA SECTION F, vol. 61, no. 5, 22 April 2005 (2005-04-22), pages 503-506, XP002363666 www.blackwell-synergy.com/doi/abs/10.1107/ S1744309105011516

## Description

The present invention relates to a method for removing at least one of oxo-anions and metal cations from a liquid.

It is in the art known to remove oxo-anions and metal cations from a liquid. For example, several filtration systems are available, that make use of, among others, activated alumina, a granular ferric hydroxide, manganese dioxide coated sand or iron coated sand, polyethylene enhanced ultrafiltration and nano-particulate transition metal oxide. These systems are either inefficient at low contaminant concentration or they add new contaminants, microbes, etc. As a matter of fact, these known systems require many hours for removing the stated impurities from the liquid. Also, these known systems are capable of removing either metal cations or oxo-anions from the liquid.

P M MATIAS ET AL.: "Crystallization and preliminary X-ray characterization of a ferritin from the hyperthermophoilic archaeon and anaerobe Pyrococcus furiosus" ACTA CRYSTALLOGRAPHICA SECTION F, vol. 61, no. 5, relates to crystallization and preliminary X-ray characterization of a ferritin from the hyperthermophoilic archaeon and anaerobe Pyrococcus furiosus.

Therefore, there is a need in the art for a material with which oxo-anions and metal cations can be removed from a liquid.

Therefore, the present invention aims at providing a material for removing oxo-anions and metal cations from a liquid that comprises a material that is capable of removing at least one of these contaminants.

Furthermore, the invention aims at providing a material that is capable of performing the filtration of a liquid in a much shorter time than the known materials.

Also, the invention aims at providing a material that is capable of removing contaminants at very low concentrations, preferably at concentrations much lower than is possible with the known materials.

So as to obtain at least one of the above aims, the invention provides a method that is characterized in that it uses hyperthermophilic ferritin.

The material according to the invention is capable of filtering contaminants at very low substrate concentrations. Furthermore, it is much quicker than the available materials, seconds in stead of minutes to hours. Also, it is capable of removing both metal cations and oxo-anions in a single step.

As a matter of fact, the material according to the present invention is regenerable and bio-degradable.

According to the present invention, a method is provided for removing at least one of oxo-anions and metal cations from a liquid, which method is characterized in that the material comprising hyperthermophilic ferritin is used as filter material. This method in accordance with the present invention provides the advantages as indicated above with respect to the material.

It is especially preferred that a method is performed for filtering water. According to this method, contaminant concentrations of metal cations and oxo-anions can be obtained that correspond or are lower than the current maximum contaminant level (MCL) of solutes in drinking water, suggested by the World Health Organization, and others.

According to a further preferred embodiment, a method is characterized in that said oxo-anions and metal cations are chosen from any of iron ions, phosphate, arsenate, vanadate, tungstate and molybdate ions. These ions can be removed efficiently with the present method.

It is further preferred that the method according to the invention comprises the step of performing a conversion of ferrous iron to ferric iron with the hyperthermophilic ferritin. Then, the iron ion is rendered insoluble, and as a matter of fact it will be precipitated in the protein shell of the ferritin protein.

Furthermore, it is preferred that said method comprises the step of performing an absorption of an oxo-anion in the protein shell of the ferritin material. It is especially preferred if a co-precipitation of the ferric iron and the oxo-anions in the protein shell is performed.

According to a further aspect of the present invention, it relates to the use of a hyperthermophilic ferritin for removing metal cations and oxo-anions from a liquid. It is especially preferred if this use is related to the removal of metal cations and oxo-anions from water, so as to obtain drinking water that fulfils the requirements of the World Health Organization, the United Nations and others.

The known method for producing a hyperthermophilic ferritin, comprises the steps of:
(a) Construction of a recombinant *E.Coli* strain containing structural gene of ferritin,
(b) over-production of the recombinant protein, and
(c) single step purification by heat treatment.

A specific advantage of the material according to the present invention is the ability to remove oxo-anions at very low concentrations, of below 10 ppb. The concentration obtainable with the present material is much beyond the capacity of the currently available technics.

Also, the ability to be sterilized repeatedly is an important advantage of the present invention. For, if the material according to the present invention would be contaminated with microbes etc., it can be sterilized, so as to yield a clean and safe filtering material.

Sterilization may be performed in an autoclave at 120°C for 20 minutes. No loss of activity is obtained by such method.

A material according to the present invention is bio-degradable. Bio-degration can be obtained by means of peptidase enzymes.

The hyperthermophilic ferritin that is used in accordance with the present invention, is stable over a wide temperature range. It is especially capable to be used at a temperature of from 0 °C to 100 °C.

In contrast to the materials known in the art, and that are used for removing metal cations or oxo-anions from a liquid, the present material is capable of removing both of these ions. Such is completely novel in the art.

The hyperthermophilic ferritin can be produced as follows:

### Constructing Recombinant E.Coli strain:

The putative ferritin gene from the *Pyrococcus furiosus* cells was amplified by the PCR method using oligonucleotides 5'-CCATATGTTGAGCGAAAGAATGC-3' as the forward primer and 5'-GTCGACT-TACTCCTCCCTG-3' as the reverse primer. Then the gene was cloned into pCR 2.1-TOPO shuttle vector (Invitrogen) and transformed into competent *E.coli* DH5α Cells for further amplification. The chimeric vector was then isolated from the cells and sequenced to check the fidelity of the clone. The ferritin gene was then separated by *Nde*I and *Sal*I (Roche) restriction digestion and recloned into expression vector pET24a (+) (Novagen). The resulting clone was then transformed into the competent BL21-CodonPlus (DE3)-RIL cells (Stratagene).

### Overexpression of the recombinant protein:

A single colony of the recombinant *E.Coli* strain was inoculated in LB (Sambrook et al., 1989) media containing 50 mg ml⁻¹ of chloramphenicol and 20 mg ml⁻¹ of kanamycin and cultivated overnight aerobically at 310 K and 200 rev. min⁻¹. This pre-culture was transformed in TB medium (Sambrook et al., 1989) in a 1:20 ratio and grown for 2 h (until it reaches the O.D₆₀₀ value of 0.5 or higher) and induced with 1 mM IPTG. Cells were then harvested by centrifugation after an additional 5 h of growth.

### Purification of Ferritin:

The cell pellet was washed and re-dissolved in 20 mM Tris-HCl buffer, pH 8. DNase and RNase were added to the solution in order to degrade the genetic elements and 0.5 mM PMSF was added to protect any protein degradation by internal protease activity. The cell suspension was then applied to a Cell Disruptor (Constant Systems) to break the cells. The cell-free extract was subjected to heat treatment (373 K, 30 min) and clarified by centrifugation. The resultant supernatant was concentrated over Amicon, YM-100, to give the final preparation of the protein.

The present invention is not limited to the description as given herein before. It is only limited by the appended claims.

## Claims

1. A method for removing at least one of oxo-anions and metal cations from a liquid, **characterized in that** a material comprising hyperthermophilic ferritin is used as filter material.

2. A method according to claim 1, **characterized in that** said liquid is water.

3. A method according to claim 1, **characterized in that** said oxo-anions and metal cations are chosen from any of iron ions, phosphate, arsenate, vanadate, tungstate and molybdate.

4. A method according to claim 1, **characterized in that** said method comprises the step of performing a conversion of ferrous iron to ferric iron with the hyperthermophilic ferritin.

5. A method according to claim 1, **characterized in that** said method comprises the step of performing an adsorption of an oxo-anion in the protein shell of the ferritin material.

6. Use of a hyperthermophilic ferritin for removing metal cations and oxo-anions from a liquid.

7. Use according to claim 6, for removing metal cations and oxo-anions from water.

## Patentansprüche

1. Verfahren zum Entfernen wenigstens eines von Oxoanionen und Metallkationen aus einer Flüssigkeit,
**dadurch gekennzeichnet, dass** ein Material, welches hyperthermophiles Ferritin aufweist, als Filtermaterial verwendet wird.

2. Verfahren nach Anspruch 1,
**dadurch gekennzeichnet, dass** die Flüssigkeit Wasser ist.

3. Verfahren nach Anspruch 1,
**dadurch gekennzeichnet, dass** die Oxoanionen und Metallkationen von irgendeinem von Eisenionen, Phosphat, Arsenat, Vanadat, Tungstat und Molybdat ausgewählt werden.

4. Verfahren nach Anspruch 1,
**dadurch gekennzeichnet, dass** das Verfahren den Schritt des Durchführens einer Umwandlung von zweiwertigem Eisen zu dreiwertigem Eisen mit dem hyperthermophilen Ferritin aufweist.

5. Verfahren nach Anspruch 1,
**dadurch gekennzeichnet, dass** das Verfahren den Schritt des Durchführens einer Adsorption eines Oxoanions in der Proteinhülle des Ferritinmaterials aufweist.

6. Verwendung eines hyperthermophilen Ferritins zum Entfernen von Metallkationen und Oxoanionen aus einer Flüssigkeit.

7. Verwendung nach Anspruch 6 zum Entfernen von Metallkationen und Oxoanionen aus Wasser.

## Revendications

1. Procédé pour éliminer au moins un des oxo-anions et cations métalliques d'un liquide, **caractérisé en ce qu'**une matière comprenant de la ferritine hyperthermophile est utilisée comme matière de filtre.

2. Procédé suivant la revendication 1, **caractérisé en ce que** ledit liquide est l'eau.

3. Procédé suivant la revendication 1, **caractérisé en ce que** lesdits oxo-anions et cations métalliques sont choisis parmi n'importe lesquels des ions fer, phosphate, arséniate, vanadate, tungstate et molybdate.

4. Procédé suivant la revendication 1, **caractérisé en ce qu'**il comprend l'étape de mise en oeuvre d'une conversion du fer ferreux en fer ferrique avec la ferritine hyperthermophile.

5. Procédé suivant la revendication 1, **caractérisé en ce qu'**il comprend l'étape de mise en oeuvre d'une adsorption d'un oxo-anion dans l'enveloppe de protéine de la matière comprenant de la ferritine.

6. Utilisation d'une ferritine hyperthermophile pour éliminer les cations métalliques et oxo-anions d'un liquide.

7. Utilisation suivant la revendication 6, pour éliminer les cations métalliques et oxo-anions de l'eau.
